# EUROPÄISCHE PATENTSCHRIFT

(11) **EP 3 893 386 B1**
(45) Veröffentlichungstag und Bekanntmachung des Hinweises auf die Patenterteilung: **01.10.2025**
(21) Anmeldenummer: 21158955.1
(22) Anmeldetag: 24.02.2021
(51) Int. Cl.: H02P 25/022

(54) **STEUERGERÄT, STEUERSCHALTUNG UND KRAFTFAHRZEUG**
CONTROL DEVICE, CONTROL CIRCUIT AND MOTOR VEHICLE
APPAREIL DE COMMANDE, CIRCUIT DE COMMANDE ET VÉHICULE AUTOMOBILE

(30) Priorität: 06.04.2020 DE 102020109481
(43) Veröffentlichungstag der Anmeldung: 13.10.2021
(73) Patentinhaber: AUDI AG, 85045 Ingolstadt (DE)
(72) Erfinder: Brüske, Stephan, 85049 Ingolstadt (DE)

(56) Entgegenhaltungen:
- WO-A1-2016/162624
- DE-A1- 102011 078 155
- DE-A1- 102016 206 765
- US-A1- 2008 001 570
- US-A1- 2013 207 589

## Beschreibung

Die Erfindung betrifft ein Steuergerät gemäß dem Oberbegriff des Anspruchs 1. Weiterhin betrifft die Erfindung eine Steuerschaltung und ein Kraftfahrzeug.

In Kraftfahrzeugen mit elektrischem Antriebsmotor werden in der Regel Leistungselektronikschaltungen zum Betreiben des Elektromotors verwendet. Dabei werden beispielsweise Traktionswechselrichter zum Betreiben eines dreiphasigen Elektromotors eingesetzt. Bei einem solchen Elektromotor kann es sich zum Beispiel um einen permanenterregten Synchronmotor handeln, dessen Erregerfeld über Permanentmagnete erzeugt wird. Bei Elektromotoren, deren Rotoren keine permanente Erregung des Rotors haben, werden zusätzlich weitere Leistungselektronikschaltungen eingesetzt, um auch die Rotorwicklung einer solchen, fremderregten elektrischen Maschine zu bestromen.

Aus DE 10 2016 206 765 A1 ist eine Vorrichtung zum Ansteuern einer Synchronmaschine eines Fahrzeugs bekannt. Die Vorrichtung kann die Synchronmaschine bei einer definierten Heizstartbedingung in einem Heizbetriebszustand betreiben, in dem ein Schmiermittels der Synchronmaschine erwärmt wird. Eine die Vorrichtung umfassende Ansteuervorrichtung weist ferner eine Stromsollwerteinheit und eine Umsetzeinheit auf, wobei mittels der Stromsollwerteinheit Stromsollwerte ermittelt und mittels der Umsetzeinheit Ansteuersignale für einen Wechselrichter anhand der Stromsollwerte erzeugt werden. Zudem werden in der Umsetzeinheit anhand des Stromsollwerts Ansteuersignale für eine nachgeschaltete Stromquelle ermittelt, mittels der ein durch eine Rotorwicklung fließender Rotorstrom eingestellt wird.

In DE 10 2009 014 703 A1 wird ein Verfahren zum Betrieb einer fremderregten Synchronmaschine beschrieben, bei dem die am Rotor der Synchronmaschine angeordneten Feldspulen über einen Erregerstromsteller betrieben werden. Bei Nichtbestromung der Feldspulen und/oder bei einem Ausfall des Erregerfeldes wird die fremderregte Synchronmaschine als Reluktanzmaschine oder als Asynchronmaschine weiterbetrieben.

Aus DE 10 2016 216 238 A1 ist eine Schaltung zur Steuerung eines Erregerstroms für eine Erregerwicklung einer elektrischen Maschine bekannt. Die Schaltung umfasst zwei Schaltkontakte zur Kontaktierung von zwei unterschiedlichen Enden der Erregerwicklung. Weiterhin umfasst die Schaltung eine Messeinheit zur Messung eines Erregerstroms sowie eine Steuereinheit, welche einen Erregerstrom auf Grundlage des gemessenen Erregerstromsignals erzeugt.

DE 10 2011 078 155 A1 betrifft ein Verfahren zum Bestimmen einer Erregerstromabgabe für einen Erregerstrom durch eine Erregerwicklung und zum Bestimmen von Phasenstromabgaben für die Phasenströme durch Phasenstränge einer elektrischen Maschine. Dabei wird über eine Strommesseinrichtung in einer Versorgungsleitung für die Phasenstränge und für die Erregerwicklung ein Messstrom gemessen, welcher der Summe eines oder mehrerer der Phasenströme und/oder des Erregerstroms entspricht. Dabei wird der der Strommessung zugrunde liegende Bestromungszustand durch ein Schaltmuster eines Gleichrichters und einer Erregerschaltung vorgegeben.

Derartige Betriebsverfahren bzw. die dazugehörigen elektrischen Schaltungen sind jeweils einem konkreten Typ von elektrischer Maschine zugeordnet und sind zum Betrieb von Elektromaschinen eines anderen Typs nicht ausgebildet.

Der Erfindung liegt daher die Aufgabe zugrunde, ein Steuergerät zum Betreiben einer mit einer elektrischen Maschine verbundenen elektrischen Schaltungsanordnung anzugeben, welche flexibel für verschiedene Maschinentypen eingesetzt werden kann und welche auf das Vermeiden unerwünschter Folgen in einem Fehlerfall gerichtet ist.

Zur erfindungsgemäßen Lösung dieser Aufgabe ist ein Steuergerät gemäß Anspruch 1 vorgesehen.

Das Steuergerät weist dabei den Vorteil auf, dass es zum Betreiben von verschiedenen Typen von elektrischen Maschinen eingesetzt werden kann. So kann das Steuergerät durch Betreiben der mit einer elektrischen Maschine verbundenen Schaltungsanordnung zum Bestromen eines Stators beispielsweise bei permanenterregten elektrischen Maschinen verwendet werden. Die elektrische Schaltungsanordnung kann insbesondere zum Bestromen eines Stators der elektrischen Maschine mit einem Wechselstrom ausgebildet sein. Bei permanenterregten elektrischen Maschinen ist kein Erregerstrom zum Erzeugen eines Erregerfeldes in einem Rotor der elektrischen Maschine notwendig, so dass eine weitere Schaltungsanordnung zum Bestromen des Rotors nicht benötigt wird. Um das Steuergerät jedoch auch bei elektrischen Maschinen einsetzen zu können, welche fremderregt sind, also bei welchen ein Erregerstrom im Rotor durch eine weitere Schaltungsanordnung erzeugt werden muss, ist das Steuergerät dazu ausgebildet, um mit wenigstens einer weiteren Schaltungsanordnung zum Bestromen des Rotors der elektrischen Maschine verbunden zu werden.

Ferner ist das Steuergerät auch zum Betreiben der weiteren Schaltungsanordnung eingerichtet. Dies ermöglicht es, dass das Steuergerät bzw. eine Steuerschaltung, welche das Steuergerät und die elektrische Schaltungsanordnung zum Bestromen eines Rotors der elektrischen Maschine umfasst, für unterschiedliche Typen von elektrischen Maschinen wie permanenterregte Synchronmaschinen, fremderregte Synchronmaschinen und Asynchronmaschinen zu verwenden.

Eine gegebenenfalls zu verwendende weitere Schaltungsanordnung zum Bestromen eines Rotors der elektrischen Maschine kann dabei vorteilhaft mit verringertem Umfang bzw. mit verringertem Aufwand bereitgestellt werden, da der Betrieb der weiteren Schaltungsanordnung auch durch das mit der weiteren Schaltungsanordnung verbundene Steuergerät vorgenommen werden kann. Dabei können vorteilhaft in dem Steuergerät implementierte Funktionen auch für den Betrieb der weiteren Schaltungsanordnung ausgelegt sein und in dem Fall, dass eine weitere Schaltungsanordnung mit dem Steuergerät verbunden ist, auch für deren Betrieb verwendet werden.

Das Steuergerät ist insbesondere zum Steuern und/oder zum Regeln der elektrischen Schaltungsanordnung und der weiteren elektrischen Schaltungsanordnung ausgebildet. Durch das Verwenden des Steuergeräts auch zum Betreiben einer weiteren Schaltungsanordnung, wenn diese bei dem genutzten Typ der elektrischen Maschine erforderlich ist, wird es ermöglicht, dass die weitere Schaltungsanordnung auf bereits im Steuergerät implementierte Funktionen zurückgreifen kann, so dass diese Funktionen nicht erneut für die weitere Schaltungsanordnung vorgesehen werden müssen. Dies reduziert den Schaltungsaufwand für die weitere Schaltungsanordnung und ermöglicht somit auch das Verwenden einer kostengünstiger ausgeführten weiteren Schaltungsanordnung.

In einer bevorzugten Ausgestaltung der Erfindung kann vorgesehen sein, dass die Schaltungsanordnung und/oder die weitere Schaltungsanordnung jeweils eine Treiberschaltung und eine wenigstens ein Schaltelement umfassende Leistungselektronikschaltung umfassen, wobei das Steuergerät zum Ansteuern der Treiberschaltung der Schaltungsanordnung und der Treiberschaltung der weiteren Schaltungsanordnung ausgebildet ist. Durch das Ansteuern der Treiberschaltung der Schaltungsanordnung und der Treiberschaltung der weiteren Schaltungsanordnung kann die Schaltungsanordnung und die weitere Schaltungsanordnung von dem Steuergerät betrieben werden.

Mittels der jeweils den Treiberschaltungen zugeordneten Leistungselektronikschaltungen kann ein Statorstrom, beispielsweise ein insbesondere dreiphasiger Wechselstrom, zum Bestromen eines Stators der elektrischen Maschine bzw. ein Strom zum Bestromen eines Rotors der elektrischen Maschine bereitgestellt werden. Dabei können die Treiberschaltungen jeweils das Schaltelement oder die Schaltelemente der zugeordneten Leistungselektronikschaltung ansteuern bzw. schalten. Als das wenigstens eine Schaltelement der Leistungselektronikschaltung der weiteren Schaltungsanordnung und/oder als das wenigstens eine Schaltelement der Leistungselektronikschaltung der weiteren Schaltungsanordnung kann insbesondere ein "Insulated Gate Bipolar Transistor" (IGBT) und/oder ein auf Siliziumcarbid basierender Metall-Oxid-Halbleiter-Feldeffekt-Transistor (SiC-MOSFET) verwendet werden. Diese können insbesondere dazu ausgebildet sein, eine Spannung eines Hochvoltenergiespeichers wie einer Hochvoltbatterie, beispielsweise eine Spannung von größer als 200 V, zu schalten.

Erfindungsgemäß kann vorgesehen sein, dass die Schaltungsanordnung einen insbesondere dreiphasigen Wechselrichter umfasst und/oder dass die weitere Schaltungsanordnung eine Halbbrücke, eine Quasi-Vollbrücke, eine Vollbrücke und/oder eine Strommesseinrichtung umfasst. Durch das Steuergerät kann somit ein Betrieb des insbesondere dreiphasigen Wechselrichters der Schaltungsanordnung zum Bestromen des Stators der elektrischen Maschine erfolgen. Bei angeschlossener weiterer Schaltungsanordnung kann durch das Steuergerät auch ein Betrieb der Halbbrücke, der Quasi-Vollbrücke, der Vollbrücke und/oder der Strommesseinrichtung der zum Bestromen eines Rotors der elektrischen Maschine ausgebildeten weiteren Schaltungsanordnung erfolgen. Eine Quasi-Vollbrücke kann dabei zwei Schaltelemente und zwei Dioden umfassen und insbesondere zum Stellen nur eines positiven Stroms eingesetzt werden.

Der Wechselrichter kann durch die wenigstens ein Schaltelement umfassende Leistungselektronikschaltung der Schaltungsanordnung gebildet sein und die Halbbrücke und/oder die Vollbrücke können durch die wenigstens ein Schaltelement umfassende Leistungselektronikschaltung der Schaltungsanordnung gebildet sein. Die Strommesseinrichtung kann beispielsweise in der Treiberschaltung der weiteren Schaltungsanordnung integriert sein.

Durch den insbesondere dreiphasigen Wechselrichter der Schaltungsanordnung kann ein von einem Energiespeicher wie einer Batterie bereitgestellter Gleichstrom in einen Wechselstrom zum Bestromen eines insbesondere dreiphasigen Stators der elektrischen Maschine gewandelt werden. Durch eine eine Halbbrücke, eine Quasi-Vollbrücke und/oder eine Vollbrücke umfassende weitere Schaltungsanordnung zum Bestromen eines Rotors kann der von dem Energiespeicher bereitgestellte Gleichstrom in einen Strom zum Bestromen des Rotors der elektrischen Maschine gewandelt werden. Die weitere Schaltungsanordnung kann beispielsweise den von dem Energiespeicher bereitgestellten Gleichstrom in einen Gleichstrom mit einer anderen Spannung, einen gepulsten Gleichstrom und/oder einen Wechselstrom wandeln. Durch die weitere Schaltungsanordnung kann so ein Rotorstrom bzw. ein Erregerstrom bereitgestellt werden, mit dem der Rotor bzw. eine Erregerwicklung der elektrischen Maschine bestromt wird.

Die weitere Schaltungsanordnung kann eine Strommesseinrichtung umfassen, mittels welcher der zum Bestromen des Rotors der elektrischen Maschine eingesetzte Rotorstrom bzw. Erregerstrom gemessen wird. Bei mit dem Steuergerät verbundener weiterer Schaltungsanordnung kann ein von der Strommesseinrichtung erzeugter Messwert von dem Steuergerät ausgelesen und zum Betreiben der weiteren Schaltungsanordnung herangezogen werden.

Erfindungsgemäß ist vorgesehen, dass das Steuergerät zur Ansteuerung der Schaltungsanordnung und der weiteren Schaltungsanordnung mit jeweils einer Sicherheitsansteuerung eingerichtet ist. Die Sicherheitsansteuerung der Schaltungsanordnung und/oder die Sicherheitsansteuerung einer mit dem Steuergerät verbundenen weiteren Schaltungsanordnung können beispielsweise bei Erfüllung eines von dem Steuergerät ausgewerteten Sicherheitskriteriums vorgenommen werden. Das Sicherheitskriterium kann dabei beispielsweise auf Grundlage von an das Steuergerät übermittelten Informationen und/oder auf Grundlage von durch das Steuergerät und/oder durch mit dem Steuergerät verbundene Sensoren erzeugten Informationen ausgewertet werden.

Wenn keine weitere Schaltungsanordnung mit dem Steuergerät verbunden ist, kann die Sicherheitsansteuerung bei Erfüllung des Sicherheitskriteriums nur bei der Schaltungsanordnung vorgenommen werden. Bei verbundener weiterer Schaltungsanordnung kann die Sicherheitsansteuerung bei der weiteren Schaltungsanordnung oder insbesondere bei der Schaltungsanordnung und der weiteren Schaltungsanordnung vorgenommen werden. Auf diese Weise kann bei Erfüllung des Sicherheitskriteriums eine dem Sicherheitskriterium zugeordnete Sicherheitsansteuerung vorgenommen werden, so dass unabhängig von dem Typ der betriebenen elektrischen Maschine durch die jeweilige Sicherheitsansteuerung eine dem Sicherheitskriterium begegnende Maßnahme ergriffen und ein Sicherheitsziel erreicht werden können.

Die Schaltungsanordnung und/oder eine mit dem Steuergerät verbundene weitere Schaltungsanordnung können insbesondere in Abhängigkeit des Typs der verwendeten elektrischen Maschine und/oder einer Höhe einer Gleichspannung, mit der die Schaltungsanordnung und/oder die weitere Schaltungsanordnung versorgt werden, zur Sicherstellung eines sicheren Zustandes der elektrischen Maschine angesteuert werden. Dazu können die Schaltungsanordnung und/oder die weitere Schaltungsanordnung jeweils in einen sicheren Zustand geschaltet werden. Damit kann eine Erfüllung einer Anforderungen entsprechend der funktionalen Sicherheit der elektrischen Maschine bzw. der diese betreibenden Schaltungsanordnungen umgesetzt werden.

Für die Sicherheitsansteuerung ist erfindungsgemäß vorgesehen, dass durch die Sicherheitsansteuerung der Schaltungsanordnung und/oder durch die Sicherheitsansteuerung der weiteren Schaltungsanordnung die elektrische Maschine momentfrei oder im Wesentlichen momentfrei schaltbar ist. Bei Auftreten eines Fehlerfalls, bei welchem beispielsweise ein verwendetes Sicherheitskriterium erfüllt ist, kann durch das Momentfreischalten der elektrischen Maschine ein primäres Sicherheitsziel erreicht werden. Durch das Momentfreischalten der elektrischen Maschine kann verhindert werden, dass durch die elektrische Maschine bei Auftreten des Fehlerfalls weiter eine Kraft und/oder ein Drehmoment erzeugt wird. Dadurch können beispielsweise unerwünschte Folgen in dem Fehlerfall vermieden werden. Durch das Steuergerät kann das Momentfreischalten der elektrischen Maschine dabei sowohl für eine elektrische Maschine vorgenommen werden, bei der nur der Stator durch die mit dem Steuergerät verbundene Schaltungsanordnung betrieben wird, als auch bei einer elektrischen Maschine, bei der sowohl der Stator als auch der Rotor über die Schaltungsanordnung bzw. die weitere Schaltungsanordnung bestromt werden. Die Begriffe "momentfrei" bzw. "im Wesentlichen momentfrei" beziehen sich in diesem Zusammenhang insbesondere auf ein Antriebsmoment. Bei manchen Typen von elektrischen Maschinen, beispielsweise bei permanenterregten Synchronmaschinen, ist es möglich, dass in einem momentfreien bzw. im Wesentlichen momentfreien Zustand der elektrischen Maschine beispielsweise durch Induktion während eines aktiven Kurzschlusses oder eines Freilaufs ein Bremsmoment bzw. ein Verzögerungsmoment erzeugt wird.

Erfindungsgemäß kann vorgesehen sein, dass durch die Sicherheitsansteuerung der Schaltungsanordnung der Stator der elektrischen Maschine stromfrei oder im Wesentlichen stromfrei oder in einen einen stromfreien Zustand oder einen im Wesentlichen stromfreien Zustand des Stators bewirkenden Schaltzustand schaltbar ist und durch die Sicherheitsansteuerung der weiteren Schaltungsanordnung der Rotor der elektrischen Maschine stromfrei oder im Wesentlichen stromfrei oder in einen einen stromfreien Zustand oder einen im Wesentlichen stromfreien Zustand des Rotors bewirkenden Schaltzustand schaltbar ist. Bei einer Schaltungsanordnung, welche einen insbesondere dreiphasigen Wechselrichter umfasst, kann durch die Sicherheitsansteuerung der Schaltungsanordnung ein Freilauf, bei dem beispielsweise alle Schaltelemente des Wechselrichters geöffnet sind, ein aktiver Kurzschluss auf einer Hochpotential-Seite des Wechselrichters, bei dem beispielsweise alle Schaltelemente auf der Hochpotential-Seite geschlossen und alle Schaltelemente auf einer Niederpotentialseite des Wechselrichters geöffnet sind, oder ein aktiver Kurzschluss auf der Niederpotential-Seite des Wechselrichters, bei dem beispielsweise alle Schaltelemente auf der Hochpotential-Seite geöffnet und alle Schaltelemente auf der Niederpotentialseite geschlossen sind, erzeugt werden. Aus diesen sicheren Schaltzuständen der Schaltungsanordnung resultiert jeweils ein stromfreier bzw. im Wesentlichen stromfreier Zustand des Stators, wodurch die elektrische Maschine momentfrei geschaltet werden kann.

In diesem Zusammenhang bezieht sich ein stromfreier bzw. im Wesentlichen stromfreier Zustand eines Stators und/oder eines Rotors darauf, dass kein ein Antriebsmoment der Maschine erzeugender Strom mehr durch den Stator und/oder den Rotor fließt. Es ist möglich, dass abhängig von einem verwendeten Maschinentyp zumindest zeitweise auch in dem stromfreien bzw. im Wesentlichen stromfreien Zustand noch ein beispielsweise ein Bremsmoment bzw. ein Verzögerungsmoment bewirkender Strom in dem Stator bzw. dem Rotor fließt. Beispielsweise kann dies in dem Stator einer permanenterregten Synchronmaschine auftreten, insbesondere bei einem aktiven Kurzschluss oder einem Freilauf des Stators, wenn eine durch einen rotierenden Rotor induzierte Spannung eine Spannung eines Zwischenkreises überschreitet.

Durch die Sicherheitsansteuerung der weiteren Schaltungsanordnung kann auch der Rotor der elektrischen Maschine stromfrei oder in einen stromfreien Zustand des Rotors bewirkenden Schaltzustand geschaltet werden. Je nach Ausgestaltung der weiteren Schaltungsanordnung kann auch dies durch einen Freilauf, einen aktiven Kurzschluss auf einer Hochpotential-Seite oder einen aktiven Kurzschluss auf einer Niederpotential-Seite einer Halbbrücke und/oder einer Vollbrücke der weiteren Schaltungsanordnung vorgenommen werden.

In einer bevorzugten Ausgestaltung der Erfindung kann vorgesehen sein, dass die Sicherheitsansteuerung der elektrischen Schaltung einer höheren Sicherheitsanforderungsstufe genügt als die Sicherheitsansteuerung der weiteren elektrischen Schaltung. Da die Anforderungen der funktionalen Sicherheit bereits durch das Steuergerät umgesetzt werden können, kann für die Sicherheitsansteuerung der weiteren Schaltungsanordnung eine geringere Sicherheitsanforderungsstufe verwendet werden, so dass eine aufwandsärmere Realisierung der weiteren Schaltungsanordnung möglich ist. Beispielsweise ist es möglich, dass die Sicherheitsansteuerung der elektrischen Schaltungsanordnung der Sicherheitsanforderungsstufe ASIL-D nach ISO 26262 genügt und die Sicherheitsansteuerung der weiteren elektrischen Schaltungsanordnung der Sicherheitsanforderungsstufe ASIL-A nach ISO 26262 genügt. Es ist auch möglich, dass die Sicherheitsansteuerung der weiteren elektrischen Schaltungsanordnung der Sicherheitsanforderungsstufe eines Qualitätsmanagements (QM) nach ISO 26262 genügt.

Ein hauptsächlich zu erreichendes Sicherheitsziel wie ein momentfreier Zustand der elektrischen Maschine kann somit mit einer hohen Sicherheitsanforderungsstufe bereits durch ein Ansteuern der Schaltungsanordnung mit einer entsprechenden Sicherheitsansteuerung durch das Steuergerät vorgenommen werden. Ein zusätzlich aus Sicherheitsgründen ebenfalls vorgenommenes Abschalten einer nur bei bestimmten Maschinentypen vorhandenen Rotorbestromung bzw. Erregerbestromung durch die weitere Schaltungsanordnung kann daher auch mit einer geringeren Sicherheitsanforderungsstufe erfüllt werden.

Für eine erfindungsgemäße Steuerschaltung ist vorgesehen, dass sie ein erfindungsgemäßes Steuergerät und eine mit der elektrischen Maschine verbindbare elektrische Schaltungsanordnung zum Betreiben der elektrischen Maschine umfasst. Das Steuergerät und die elektrische Schaltungsanordnung können dabei auf einem gemeinsamen Trägerelement, beispielsweise einer gemeinsamen Platine, ausgebildet sein. Es ist auch möglich, dass das Steuergerät und die elektrische Schaltungsanordnung jeweils auf getrennten Trägerelementen bzw. getrennten Platinen ausgebildet sind, wobei die Schaltungen bzw. die Platinen miteinander beispielsweise über wenigstens eine elektrische Leitung und/oder eine Steckverbindung elektrisch verbunden sind.

Erfindungsgemäß kann vorgesehen sein, dass die Steuerschaltung eine weitere Schaltungsanordnung, welche zum Bestromen eines Rotors der elektrischen Maschine ausgebildet ist, umfasst. Die weitere Schaltungsanordnung kann dabei insbesondere auf einem separaten Trägerelement, insbesondere auf einer separaten Platine, ausgebildet sein, wobei die weitere Schaltungsanordnung mit der Steuerschaltung, insbesondere mit dem Steuergerät der Steuerschaltung, elektrisch verbunden ist. Die Verbindung der weiteren Schaltungsanordnung mit der Steuerschaltung kann beispielsweise über eine Steckverbindung erfolgen.

Für ein erfindungsgemäßes Kraftfahrzeug ist vorgesehen, dass es ein erfindungsgemäßes Steuergerät und/oder eine erfindungsgemäße Steuerschaltung umfasst. Die durch die Schaltungsanordnung und/oder die weitere Schaltungsanordnung betriebene elektrische Maschine kann insbesondere der oder ein Traktionselektromotor des Kraftfahrzeugs sein. Die elektrische Maschine kann eine permanenterregte Synchronmaschine, eine fremderregte Synchronmaschine oder eine Asynchronmaschine sein. Das Kraftfahrzeug kann weiterhin einen Energiespeicher, insbesondere eine Hochvoltbatterie, umfassen, welche einen Gleichstrom bereitstellt, der durch die Schaltungsanordnung und/oder die weitere Schaltungsanordnung zum Bestromen des Stators und/oder zum Bestromen des Rotors der elektrischen Maschine verwendet wird.

Sämtliche vorangehend in Bezug zum erfindungsgemäßen Steuergerät beschriebenen Vorteile und Ausgestaltungen gelten entsprechend auch für die erfindungsgemäße Steuerschaltung und für das erfindungsgemäße Kraftfahrzeug.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: eine schematische Seitenansicht eines ersten Ausführungsbeispiels eines erfindungsgemäßen Kraftfahrzeugs,
- Fig. 2: eine Seitenansicht eines zweiten Ausführungsbeispiels eines erfindungsgemäßen Kraftfahrzeugs, und
- Fig. 3: ein Ausführungsbeispiel einer erfindungsgemäßen Steuerschaltung.

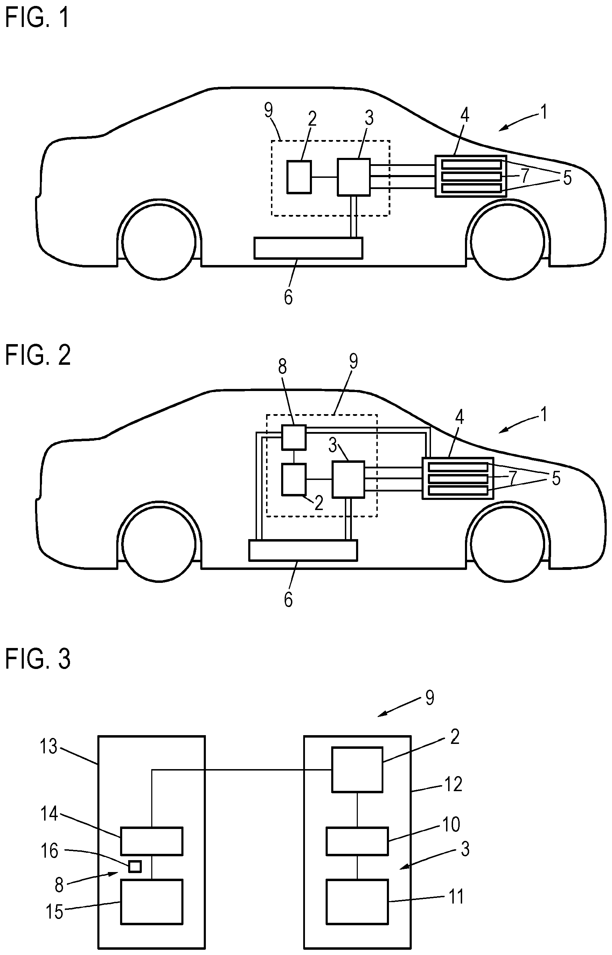

In Fig. 1 ist ein erstes Ausführungsbeispiel eines Kraftfahrzeugs 1 dargestellt. Das Kraftfahrzeug 1 umfasst ein erfindungsgemäßes Steuergerät 2 zum Betreiben einer elektrischen Schaltungsanordnung 3, welche mit einer elektrischen Maschine 4 des Kraftfahrzeuges 1 verbunden ist. Das Steuergerät 2, und die Schaltungsanordnung 3 bilden dabei eine Steuerschaltung 9. Die elektrische Schaltungsanordnung 3 ist zum Bestromen eines Stators 5 der elektrischen Maschine 4 ausgebildet. Die Schaltungsanordnung 3 ist dazu ausgebildet, einen von einem Energiespeicher 6 des Kraftfahrzeugs 1 erzeugten Gleichstrom in einen dreiphasigen Wechselstrom zum Bestromen des Stators 5 der elektrischen Maschine 4 zu wandeln. Die Schaltungsanordnung 3 wird dazu durch das Steuergerät 2 betrieben. Durch das Steuergerät 2 kann somit eine elektrische Maschine 4 des Kraftfahrzeuges 1 betrieben, insbesondere gesteuert und/oder geregelt, werden, welche beispielsweise als permanenterregte Synchronmaschine oder als Asynchronmaschine ausgebildet ist. Bei einem solchen Typ einer elektrischen Maschine ist eine Bestromung eines Rotors 7 der elektrischen Maschine 4 nicht erforderlich.

Das Steuergerät 2 ist jedoch weiterhin dazu ausgebildet, auch eine weitere Schaltungsanordnung 8 zu betreiben, welche zum Bestromen eines Rotors einer fremderregten elektrischen Maschine ausgebildet ist. Dies ermöglicht es, dass das Steuergerät 2 auch in einem Kraftfahrzeug eingesetzt werden kann, welches beispielsweise eine fremderregte Synchronmaschine als elektrische Maschine 4 aufweist.

Ein solches Kraftfahrzeug ist als zweites Ausführungsbeispiel in Fig. 2 dargestellt. In diesem Ausführungsbeispiel umfasst das Kraftfahrzeug 1 zusätzlich zu den Komponenten des ersten Ausführungsbeispiels eine weitere Schaltungsanordnung 8, welche zum Bestromen des Rotors 7 der elektrischen Maschine 4 ausgebildet ist. Das Steuergerät 2, die Schaltungsanordnung 3 und die weitere Schaltungsanordnung 8 bilden dabei eine Steuerschaltung 9. In diesem Ausführungsbeispiel ist die elektrische Maschine 4 als eine fremderregte Synchronmaschine ausgebildet. Durch die weitere Schaltungsanordnung 8 wird ein Erregerstrom bereitgestellt, über den der Rotor 7 der elektrischen Maschine 4 bestromt wird. Die weitere Schaltungsanordnung 8 ist dazu ebenfalls mit dem Energiespeicher 6 des Kraftfahrzeugs 1 verbunden.

In Fig. 3 ist ein Ausführungsbeispiel einer Steuerschaltung 9 gezeigt. Bei dieser Steuerschaltung 9 kann es sich beispielsweise um die in dem in Fig. 2 gezeigten Kraftfahrzeug verwendete Steuerschaltung 9 handeln. Die Schaltungsanordnung 3 umfasst eine Treiberschaltung 10 sowie eine mehrere Schaltelemente umfassende Leistungselektronikschaltung 11. Die Leistungselektronikschaltung 11 ist dabei als ein dreiphasiger Wechselrichter ausgeführt. Die Treiberschaltung 10 ist als Gatetreiber zur Steuerung der Schaltelemente der Leistungselektronikschaltung 11 ausgebildet. Bei den Schaltelementen der Leistungselektronikschaltung 11 kann es sich beispielsweise um Bipolartransistoren mit isolierendem Gate (IGBTs) oder um Metalloxid-Halbleiter-Feldeffekt-Transistoren auf Siliziumcarbid-Basis (SiC-MOSFET) handeln. Das Steuergerät 2 und die weitere Schaltungsanordnung 3 sind dabei auf einem gemeinsamen Trägerelement 12 ausgebildet. Bei dem Trägerelement 12 kann es sich beispielsweise um eine Platine handeln.

Mit dem Steuergerät 2 verbunden ist die auf einem separaten Trägerelement 13 ausgebildete weitere Schaltungsanordnung 8. Diese umfasst eine Treiberschaltung 14 sowie eine ein Schaltelement umfassende Leistungselektronikschaltung 15. Die Leistungselektronikschaltung 15 kann dabei als eine Halbbrücke, eine Quasi-Vollbrücke oder eine Vollbrücke ausgeführt sein. Eine Quasi-Vollbrücke kann dabei zwei Schaltelemente und zwei Dioden umfassen und insbesondere zum Stellen nur eines positiven Stroms verwendet werden. Weiterhin umfasst die weitere Schaltungsanordnung 8 eine Strommesseinrichtung 16. Die Strommesseinrichtung 16 kann einen von der weiteren Schaltungsanordnung 8 erzeugten Rotorstrom bzw. Erregerstrom messen und ist mit dem Steuergerät 2 verbunden. Das Steuergerät 2 kann die weitere Schaltungsanordnung 8 beispielsweise in Abhängigkeit eines von der Strommesseinrichtung 16 erzeugten Messwerts betreiben.

Durch die Treiberschaltung 14 kann eine Ansteuerung der Leistungselektronikschaltung 15 vorgenommen werden, so dass durch diese ein beispielsweise aus dem Energiespeicher 6 des Kraftfahrzeugs 1 entnommener Gleichstrom in einen Strom zum Bestromen des Rotors 7 einer als fremderregte Synchronmaschine ausgebildeten elektrischen Maschine 4 gewandelt wird. Die Leistungselektronikschaltung 15 kann aus dem Gleichstrom beispielsweise einen Wechselstrom, einen Gleichstrom mit einem anderen Spannungsniveau oder einen gepulsten Gleichstrom erzeugen. Die Ansteuerung der Treiberschaltung 14 erfolgt dabei ebenso wie die Ansteuerung der Treiberschaltung 10 durch das Steuergerät 2.

Durch das Steuergerät 2 ist weiterhin eine Sicherheitsansteuerung der Schaltungsanordnung 3 und eine Sicherheitsansteuerung der weiteren Schaltungsanordnung 8 möglich. Durch die Sicherheitsansteuerung der Schaltungsanordnung 3 und/oder durch die Sicherheitsansteuerung der weiteren Schaltungsanordnung 8 ist dabei eine elektrische Maschine 4, welche mit der Steuerschaltung 9 verbunden ist, momentfrei schaltbar. Dies ist sowohl für elektrische Maschinen notwendig, bei denen nur eine Bestromung des Stators durch die Schaltungsanordnung 3 vorgesehen ist, beispielsweise in dem ersten Ausführungsbeispiel eines Kraftfahrzeugs 1 gemäß Fig. 1, als auch in Ausgestaltungen, in denen eine elektrische Maschine verwendet wird, bei der sowohl der Stator als auch der Rotor bestromt werden, beispielsweise in dem zweiten Ausführungsbeispiel eines Kraftfahrzeugs 1 gemäß Fig. 2. Dies ermöglicht es, dass das Steuergerät 2 bzw. die Steuerschaltung 9 flexibel für verschiedene Typen der elektrischen Maschine 4 eingesetzt werden kann.

Eine Sicherheitsansteuerung der Schaltungsanordnung 3 und/oder der weiteren Schaltungsanordnung 9 kann beispielsweise bei Erfüllung eines von dem Steuergerät 2 ausgewerteten Sicherheitskriteriums vorgenommen werden. Das Sicherheitskriterium kann durch das Steuergerät 2 auf Grundlage von an das Steuergerät übermittelten Informationen, beispielsweise von über einen Datenbus des Kraftfahrzeugs 1 übermittelten Informationen, und/oder auf Grundlage von durch das Steuergerät 2 und/oder durch mit dem Steuergerät 2 verbundene Sensoren erzeugte Informationen ausgewertet werden.

Durch die Sicherheitsansteuerung der Schaltungsanordnung 3 wird die Schaltungsanordnung 3 in einen einen stromfreien Zustand des Stators 5 bewirkenden Schaltzustand geschaltet. Dieser bewirkt, dass der Stator 5 der elektrischen Maschine 4 stromfrei wird. Bei dem Schaltzustand kann es sich beispielsweise um einen Freilauf, einen aktiven Kurzschluss auf einer Hochpotential-Seite oder einen aktiven Kurzschluss auf der Niederpotential-Seite der als dreiphasiger Wechselrichter ausgebildeten Leistungselektronikschaltung 11 handeln. Zum Erreichen dieses Schaltzustands nimmt das Steuergerät 2 eine entsprechende Ansteuerung der Treiberschaltung 10 vor, welche entsprechend den Schaltzustand der Leistungselektronikschaltung 11 bei den Schaltelementen der Leistungselektronikschaltung 11 einstellt.

Entsprechend kann auch eine Sicherheitsansteuerung der weiteren Schaltungsanordnung 3 vorgenommen werden, bei der das Steuergerät 2 die Treiberschaltung 14 zum Bewirken eines stromfreien Zustands des Rotors 7 der elektrischen Maschine 4 ansteuert. Durch die Treiberschaltung 14 kann beispielsweise ein Freilauf oder ein Kurzschluss einer Halbbrücke und/oder einer Vollbrücke der Leistungselektronikschaltung 15 vorgenommen werden. Auf diese Weise kann auch der Rotor einer elektrischen Maschine stromfrei geschaltet werden.

Die Sicherheitsansteuerung der elektrischen Schaltung 3 kann dabei einer höheren Sicherheitsanforderungsstufe genügen als die Sicherheitsansteuerung der weiteren elektrischen Schaltung 8. Beispielsweise kann die Sicherheitsansteuerung der elektrischen Schaltung 3 der Sicherheitsanforderungsstufe ASIL-D nach ISO 26262 und die Sicherheitsansteuerung der weiteren elektrischen Schaltung 8 der Sicherheitsanforderungsstufe ASIL-A oder der Sicherheitsanforderungsstufe QM nach ISO 26262 genügen. Somit kann bei dem Einsatz des Steuergerätes 2 unabhängig von einem verwendeten Typ einer elektrischen Maschine 4 eine Sicherheitsansteuerung der Schaltungsanordnung 3 mittels der hohen Sicherheitsanforderungsstufe vorgenommen werden, da beispielsweise ein zu erreichendes Sicherheitsziel wie ein momentfreier oder im Wesentlichen momentfreier Zustand der elektrischen Maschine 4 bereits durch das stromfreie oder im Wesentlichen stromfreie Schalten des Stators bzw. durch den einen stromfreien oder im Wesentlichen stromfreien Zustand des Stators bewirkenden Schaltzustand der Leistungselektronikschaltung 11 erreicht wird.

Aufgrund der Ausbildung des Steuergerätes 2 kann, wenn eine weitere Schaltungsanordnung 8 mit dem Steuergerät 2 verbunden ist, durch das Steuergerät 2 zusätzlich oder alternativ auch eine Sicherheitsansteuerung der weiteren Schaltungsanordnung 8 vorgenommen werden, so dass auch der Rotor 7 der elektrischen Maschine 4 stromfrei bzw. die Leistungselektronikschaltung 15 durch eine entsprechende Ansteuerung der Treiberschaltung 14 in einen einen stromfreien Zustand des Rotors 7 bewirkenden Schaltzustand geschaltet werden.

Die Begriffe "momentfrei" bzw. "im Wesentlichen momentfrei" beziehen sich in diesem Zusammenhang insbesondere auf ein Antriebsmoment. Bei manchen Typen von elektrischen Maschinen 4, beispielsweise bei permanenterregten Synchronmaschinen, ist es möglich, dass in einem momentfreien bzw. im Wesentlichen momentfreien Zustand der elektrischen Maschine 4 beispielsweise durch Induktion während eines aktiven Kurzschlusses oder eines Freilaufs ein Bremsmoment bzw. ein Verzögerungsmoment erzeugt wird.

Entsprechend bezieht sich ein stromfreier bzw. im Wesentlichen stromfreier Zustand eines Stators 5 und/oder eines Rotors 7 darauf, dass kein ein Antriebsmoment der Maschine erzeugender Strom mehr durch den Stator 5 und/oder den Rotor 7 fließt. Es ist möglich, dass abhängig von einem verwendeten Maschinentyp zumindest zeitweise auch in dem stromfreien bzw. im Wesentlichen stromfreien Zustand noch ein beispielsweise ein Bremsmoment bzw. ein Verzögerungsmoment bewirkender Strom in dem Stator 5 bzw. dem Rotor 7 fließt. Beispielsweise kann dies in dem Stator 5 einer permanenterregten Synchronmaschine auftreten, insbesondere bei einem aktiven Kurzschluss oder einem Freilauf des Stators 5, wenn eine durch einen rotierenden Rotor 7 induzierte Spannung eine Spannung eines Zwischenkreises überschreitet.

Die weitere Schaltungsanordnung 8 kann mit dem Steuergerät 2 beispielsweise über eine Steckverbindung des Trägerelementes 13 mit dem Trägerelement 12 verbunden werden. Neben der Verwendung eines gemeinsamen Trägerelementes 12 für die Schaltungsanordnung 3 und das Steuergerät 2 ist es auch möglich, dass das Steuergerät 2 und die Schaltungsanordnung 3 jeweils auf einem separaten Trägerelement, beispielsweise einer Platine, angeordnet sind, wobei eine elektrische Verbindung zwischen dem Steuergerät 2 und der Schaltungsanordnung 3 durch eine Verbindung der Trägerelemente, beispielsweise über eine elektrische Leitung und/oder eine Steckverbindung, erzeugt wird.

## Patentansprüche

1. Steuergerät zum Betreiben einer mit einer elektrischen Maschine (4) verbundenen, zum Bestromen eines Stators (5) der elektrischen Maschine (4) ausgebildeten elektrischen Schaltungsanordnung (3), wobei das Steuergerät (2) mit wenigstens einer weiteren Schaltungsanordnung (8), welche zum Bestromen eines Rotors (7) der elektrischen Maschine (4) ausgebildet ist, verbindbar ist, wobei das Steuergerät (2) zum Betreiben der weiteren Schaltungsanordnung (8) eingerichtet ist,
**dadurch gekennzeichnet,**
**dass** das Steuergerät (2) zur Ansteuerung der Schaltungsanordnung (3) und der weiteren Schaltungsanordnung (8) mit jeweils einer Sicherheitsansteuerung eingerichtet ist, wobei durch das Steuergerät (2) die Sicherheitsansteuerung der Schaltungsanordnung (3) und die Sicherheitsansteuerung der weiteren Schaltungsanordnung (8) ermöglicht ist, wobei durch die Sicherheitsansteuerung der Schaltungsanordnung (3) und/oder durch die Sicherheitsansteuerung der weiteren Schaltungsanordnung (8) die elektrische Maschine (4) momentfrei oder im Wesentlichen momentfrei schaltbar ist.

2. Steuergerät nach Anspruch 1,
**dadurch gekennzeichnet,**
**dass** die Schaltungsanordnung (3) und/oder die weitere Schaltungsanordnung (8) jeweils eine Treiberschaltung (10, 14) und eine wenigstens ein Schaltelement umfassende Leistungselektronikschaltung (11, 15) umfassen, wobei das Steuergerät (2) zum Ansteuern der Treiberschaltung (10) der Schaltungsanordnung (3) und der Treiberschaltung (15) der weiteren Schaltungsanordnung (8) ausgebildet ist.

3. Steuergerät nach Anspruch 1 oder 2,
**dadurch gekennzeichnet,**
**dass** die Schaltungsanordnung (3) einen insbesondere dreiphasigen Wechselrichter umfasst und/oder dass die weitere Schaltungsanordnung (8) eine Halbbrücke, eine Quasi-Vollbrücke, eine Vollbrücke und/oder eine Strommesseinrichtung (16) umfasst.

4. Steuergerät nach einem der vorangehenden Ansprüche,
**dadurch gekennzeichnet,**
**dass** durch die Sicherheitsansteuerung der Schaltungsanordnung (3) der Stator (5) der elektrischen Maschine (4) stromfrei oder im Wesentlichen stromfrei oder in einen einen stromfreien Zustand oder einen im Wesentlichen stromfreien Zustand des Stators (5) bewirkenden Schaltzustand schaltbar ist und durch die Sicherheitsansteuerung der weiteren Schaltungsanordnung (8) der Rotor (7) der elektrischen Maschine (4) stromfrei oder im Wesentlichen stromfrei oder in einen einen stromfreien Zustand oder einen im Wesentlichen stromfreien Zustand des Rotors (7) bewirkenden Schaltzustand schaltbar ist.

5. Steuergerät nach einem der vorangehenden Ansprüche,
**dadurch gekennzeichnet,**
**dass** die Sicherheitsansteuerung der elektrischen Schaltung (3) einer höheren Sicherheitsanforderungsstufe genügt als die Sicherheitsansteuerung der weiteren elektrischen Schaltung (8).

6. Steuerschaltung umfassend ein Steuergerät (2) nach einem der vorangehenden Ansprüche und eine mit der elektrischen Maschine (4) verbindbare elektrischen Schaltungsanordnung (3) zum Betreiben der elektrischen Maschine (4).

7. Steuerschaltung nach Anspruch 6,
**dadurch gekennzeichnet,**
**dass** die Steuerschaltung (9) eine weitere Schaltungsanordnung (8), welche zum Bestromen eines Rotors (7) der elektrischen Maschine (4) ausgebildet ist, umfasst.

8. Kraftfahrzeug umfassend ein Steuergerät (2) nach einem der Ansprüche 1 bis 5 und/oder eine Steuerschaltung (9) nach Anspruch 6 oder 7.

## Claims

1. Control device for operating an electrical circuit arrangement (3) connected to an electrical machine (4), which circuit arrangement (3) is designed to energize a stator (5) of the electrical machine (4), wherein the control device (2) can be connected to at least one further circuit arrangement (8), which is designed to energize a rotor (7) of the electrical machine (4), wherein the control device (2) is configured to operate the further circuit arrangement (8),
**characterized in that**
the control device (2) is configured to control the circuit arrangement (3) and the further circuit arrangement (8), each with a safety controller, wherein the safety controller of the circuit arrangement (3) and the safety controller of the further circuit arrangement (8) are enabled by the control device (2), wherein the electrical machine (4) can be switched in a torque-free or substantially torque-free manner by the safety controller of the circuit arrangement (3) and/or by the safety controller of the further circuit arrangement (8).

2. Control device according to claim 1,
**characterized in that**
the circuit arrangement (3) and/or the further circuit arrangement (8) each comprise a driver circuit (10, 14) and a power electronics circuit (11, 15) comprising at least one switching element, wherein the control device (2) is designed to control the driver circuit (10) of the circuit arrangement (3) and the driver circuit (15) of the further circuit arrangement (8).

3. Control device according to claim 1 or 2,
**characterized in that**
the circuit arrangement (3) comprises an in particular three-phase inverter and/or in that the further circuit arrangement (8) comprises a half bridge, a quasi-full bridge, a full bridge and/or a current measuring apparatus (16).

4. Control device according to any one of the preceding claims,
**characterized in that**
the stator (5) of the electrical machine (4) can be switched in a current-free or substantially current-free manner or into a switching state bringing about a current-free state or a substantially current-free state of the stator (5) by the safety controller of the circuit arrangement (3), and the rotor (7) of the electrical machine (4) can be switched in a current-free or a substantially current-free state or into a switching state bringing about a current-free state or a substantially current-free state of the rotor (7) by the safety controller of the further circuit arrangement (8).

5. Control device according to any one of the preceding claims,
**characterized in that**
the safety controller of the electrical circuit (3) meets a higher level of safety requirements than the safety controller of the further electrical circuit (8).

6. Control circuit comprising a control device (2) according to any one of the preceding claims and an electrical circuit arrangement (3), which can be connected to electrical machine (4), for operating the electrical machine (4).

7. Control circuit according to claim 6,
**characterized in that**
the control circuit (9) comprises a further circuit arrangement (8), which is designed to energize a rotor (7) of the electrical machine (4).

8. Motor vehicle comprising a control device (2) according to any one of claims 1 to 5 and/or a control circuit (9) according to claim 6 or 7.

## Revendications

1. Appareil de commande destiné à faire fonctionner une configuration de circuit électrique (3) reliée à un moteur électrique (4) et réalisée pour l'alimentation électrique d'un stator (5) du moteur électrique (4), dans lequel l'appareil de commande (2) peut être relié à au moins une autre configuration de circuit (8) qui est réalisée pour l'alimentation électrique d'un rotor (7) du moteur électrique (4), dans lequel l'appareil de commande (2) est configuré pour l'alimentation électrique de l'autre configuration de circuit (8),
**caractérisé en ce que**
l'appareil de commande (2) destiné à la commande de la configuration de circuit (3) et de l'autre configuration de circuit (8) est configuré avec respectivement une commande de sécurité, dans lequel la commande de sécurité de la configuration de circuit (3) et la commande de sécurité de l'autre configuration de circuit (8) sont rendues possibles par le biais de l'appareil de commande (2), dans lequel le moteur électrique (4) peut être commuté sans couple ou sensiblement sans couple par le biais de la commande de sécurité de la configuration de circuit (3) et/ou par le biais de la commande de sécurité de l'autre configuration de circuit (8).

2. Appareil de commande selon la revendication 1,
**caractérisé en ce que**
la configuration de circuit (3) et/ou l'autre configuration de circuit (8) comprennent respectivement un circuit d'attaque (10, 14) et un circuit électronique de puissance (11, 15) comprenant au moins un élément de commutation, dans lequel l'appareil de commande (2) est réalisé pour la commande du circuit d'attaque (10) de la configuration de circuit (3) et du circuit d'attaque (15) de l'autre configuration de circuit (8).

3. Appareil de commande selon la revendication 1 ou 2,
**caractérisé en ce que**
la configuration de circuit (3) comprend un onduleur en particulier triphasé et/ou en ce que l'autre configuration de circuit (8) comprend un demi-pont, un pont quasi complet, un pont complet et/ou un dispositif de mesure de courant (16).

4. Appareil de commande selon l'une quelconque des revendications précédentes,
**caractérisé en ce que**
le stator (5) du moteur électrique (4) peut être commuté hors tension ou sensiblement hors tension ou dans un état de commutation provoquant un état hors tension ou un état sensiblement hors tension du stator (5) par le biais de la commande de sécurité de la configuration de circuit (3) et le rotor (7) du moteur électrique (4) peut être commuté hors tension ou sensiblement hors tension ou dans un état de commutation provoquant un état hors tension ou un état sensiblement hors tension du rotor (7) par le biais de la commande de sécurité de l'autre configuration de circuit (8).

5. Appareil de commande selon l'une quelconque des revendications précédentes,
**caractérisé en ce que**
la commande de sécurité du circuit électrique (3) d'un niveau d'exigence de sécurité supérieur suffit en tant que commande de sécurité de l'autre circuit électrique (8).

6. Circuit de commande comprenant un appareil de commande (2) selon l'une quelconque des revendications précédentes et une configuration de circuit électrique (3) qui peut être reliée au moteur électrique (4), configuration qui est destinée à l'alimentation électrique du moteur électrique (4).

7. Appareil de commande selon la revendication 6,
**caractérisé en ce que**
le circuit de commande (9) comprend une autre configuration de circuit (8) qui est réalisée pour l'alimentation électrique d'un rotor (7) du moteur électrique (4).

8. Véhicule à moteur comprenant un appareil de commande (2) selon l'une quelconque des revendications 1 à 5 et/ou un circuit de commande (9) selon la revendication 6 ou 7.
